# EUROPÄISCHE PATENTSCHRIFT

(11) **EP 2 782 805 B1**
(45) Veröffentlichungstag und Bekanntmachung des Hinweises auf die Patenterteilung: **08.06.2016**
(21) Anmeldenummer: 12787361.0
(22) Anmeldetag: 26.10.2012
(51) Int. Cl.: B60W 30/184, B60W 50/06

(54) **VERFAHREN ZUR STEUERUNG DES BETRIEBS EINER ANORDNUNG VON WENIGSTENS ZWEI ELEKTROMASCHINEN UND KRAFTFAHRZEUG**
METHOD FOR CONTROLLING THE OPERATION OF AN ARRANGEMENT OF AT LEAST TWO ELECTRIC MACHINES, AND MOTOR VEHICLE
PROCÉDÉ DE COMMANDE DU FONCTIONNEMENT D'UN ENSEMBLE D'AU MOINS DEUX MOTEURS ÉLECTRIQUES, ET VÉHICULE AUTOMOBILE

(30) Priorität: 23.11.2011 DE 102011119207
(43) Veröffentlichungstag der Anmeldung: 01.10.2014
(73) Patentinhaber: Audi AG, 85045 Ingolstadt (DE)
(72) Erfinder: KRUSE, Alexander, 85051 Ingolstadt (DE); SCHNEIDER, Tobias, 85057 Ingolstadt (DE)
(74) Vertreter: Wohnert, Dietmar
(86) Internationale Anmeldenummer: PCT/EP2012/004480
(87) Internationale Veröffentlichungsnummer: WO 2013/075778

(56) Entgegenhaltungen:
- EP-A2- 2 383 141
- GB-A- 2 371 631
- JP-A- 3 276 573
- US-A1- 2003 045 978
- US-A1- 2005 264 102
- US-A1- 2010 066 288

## Beschreibung

Die Erfindung betrifft ein Verfahren zur Steuerung des Betriebs einer Anordnung von wenigstens zwei Elektromaschinen, die mit unterschiedlichen Rädern eines Kraftfahrzeugs bewegungsgekoppelt sind und mit einer Batterie verbunden sind, welche Batterie einen aktuellen minimalen und einen aktuellen maximalen Grenzstrom für die Elektromaschine zur Verfügung stellt, wobei von einer Antriebssteuerlogik Sollmomente für die Elektromaschinen zur Verfügung gestellt werden. Daneben betrifft die Erfindung ein Kraftfahrzeug.

Im Bereich der Kraftfahrzeuge wurden sowohl für Elektrokraftfahrzeuge als auch für Hybridkraftfahrzeuge Antriebsanordnungen vorgeschlagen, die wenigstens zwei Rädern einer Achse des Kraftfahrzeugs, insbesondere allen vier Rädern, jeweils eine Elektromaschine zuordnen, so dass Räder des Kraftfahrzeugs, die auf derselben Achse angeordnet sind, unabhängig angetrieben werden können. Das gezielte Beschleunigen einzelner Räder ist beim Betrieb einiger Fahrerassistenzsysteme, beispielsweise bei Anti-Blockier-Systemen, Anti-Schlupfsystemen, elektronischen Stabilitätssystemen, Fahrdynamiksystemen und dergleichen, nützlich. Insbesondere ist es jedoch auch denkbar, einen Lenkvorgang durch entsprechendes Ansteuern der Elektromaschine zu realisieren. So kann beispielsweise das Antriebsmoment auf einer Seite um einen bestimmten Wert reduziert werden und auf der anderen Seite um einen bestimmten Wert erhöht werden, um einen Lenkvorgang zu erzeugen. Ein derartiges Vorgehen ist im Stand der Technik unter den Begriffen elektrisches Torque-Vectoring, eTV, und fahrdynamische Querverteilung bekannt.

Ein derartiges Kraftfahrzeug, bei dem den Antriebsrädern einer Achse jeweils eine Elektromaschine zugeordnet ist, ist beispielsweise in DE 10 2007 056 301 A1 bekannt. Dort können die Antriebsräder der Achse unabhängig voneinander angetrieben bzw. unabhängig voneinander generatorisch gebremst werden. Die Elektromaschinen werden gezielt zur Erzeugung von Antriebs- bzw. Bremsmomenten eingesetzt, wodurch an der ersten Achse eine aktiv regelbare Quermomentenverteilung darstellbar ist und das Kraftfahrzeug in kritischen Situationen stabilisiert werden kann.

Bezüglich des elektrischen Torque-Vectoring treten in solchen Umgebung jedoch immer dann Probleme auf, wenn die zum Antrieb der Elektromaschinen genutzte Batterie, insbesondere eine Hochvoltbatterie, voll oder leer ist, mithin bestimmte Ladezustände einnimmt, in denen der Lade- oder Entladestrom stark begrenzt ist. Dann würde beispielsweise bei voller Batterie gegebenenfalls ein zu starker Ladestrom auftreten, so dass die Batterie gefährdet wird. Ein ähnliches Problem kann bei einer leeren bzw. fast leeren Batterie auftreten, wenn ein zu starker Energiebedarf im System besteht. Daher kann bei voller oder leerer Batterie keine fahrdynamische Querverteilung (elektrisches Torque-Vectoring) erfolgen. Bei Hybridfahrzeugen kann ein derartiges, die fahrdynamische Querverteilung ausschließendes Problem auch dann auftreten, wenn die Batterie sehr kalt oder sehr heiß ist, das bedeutet, bestimmte Grenztemperaturen unterschreitet bzw. überschreitet, da dann auch der Lade- oder Entladestrom stark begrenzt ist. Bei reinen Elektrokraftfahrzeugen tritt dieses Problem nicht auf, da diese bei kalter Batterie nicht fahren können.

Die Ansteuerung von Elektromaschinen, die derselben Achse eines Kraftfahrzeugs zugeordnet sind, übernimmt dabei üblicherweise ein Antriebssteuergerät durch die Ermittlung von Sollmomenten, die an den Elektromaschinen erzeugt werden sollen. Im Rahmen der Steuerung wird den Elektromaschinen dann sozusagen ein Strom "vorhergesagt" (Stromvorhersage), um diese Sollmomente zu realisieren. Zwar mag es nun in einer einfachen Ausgestaltung denkbar sein, immer dann, wenn eine volle Batterie vorliegt und eine Elektromaschine antreibt, durch entsprechende Kommunikation im Antriebssystem den Ist-Strom der gegenüberliegenden Elektromaschine als zusätzlichen Generatorstrom vorherzusagen, während bei leerer Batterie bei Regeneration einer Elektromaschine der erzeugte Ist-Strom der gegenüberliegenden Elektromaschine als zusätzlicher Motorstrom vorhergesagt werden kann. Es findet dann also eine Verschiebung der Ist-Ströme derart statt, dass der Regelverzug durch die Kommunikation immer auf der unkritischen Seite des Batteriestroms liegt, jedoch tritt der massive Nachteil auf, dass durch die Zeit, die die Bus-Kommunikation benötigt, Regelungsverzüge auftreten, die zu ungewollten Effekten und zu einer Einschränkung des Komforts führen können.

Der Erfindung liegt daher die Aufgabe zugrunde, ein Verfahren anzugeben, bei dem die Ansteuerung der Elektromaschinen dynamischer, insbesondere schneller erreicht werden kann, ohne dass Batteriestromgrenzen überschritten werden, insbesondere im Bereich der fahrdynamischen Querverteilung.

Zur Lösung dieser Aufgabe ist bei einem Verfahren der eingangs genannten Art erfindungsgemäß vorgesehen, dass für jede Elektromaschine ein aus dem Sollmoment resultierender Sollstrom ermittelt wird und die Summe der Sollströme der Elektromaschinen mit dem maximalen und dem minimalen Grenzstrom verglichen werden, wobei bei einer außerhalb des durch die Grenzströme definierten Intervalls liegenden Summe die Sollströme anhand wenigstens einer Änderungsregel so abgeändert werden, dass die Summe der Sollströme innerhalb der Grenzströme liegt, und aus den geänderten Sollströmen geänderte Sollmomente bestimmt werden, die zur Ansteuerung der Elektromaschinen verwendet werden.

Dabei kann das erfindungsgemäße Verfahren, welches selbstverständlich automatisch durchgeführt wird, beispielsweise in einem Antriebssteuergerät realisiert werden. Sobald durch die Steuerlogik mithin die Sollmomente für die Elektromaschinen, wobei insbesondere zwei einer Achse zugeordnete Elektromaschinen oder vier Elektromaschinen, von denen jeweils zwei einer Achse zugeordnet sind, betrachtet werden, ermittelt worden sind, wird hieraus ein Strom ermittelt, der benötigt wird, um dieses Sollmoment zu erzeugen. Bereits bevor nun die tatsächliche Ansteuerung der Elektromaschinen erfolgt, wird nun überprüft, ob Batteriestromgrenzen, mithin die Grenzströme, überschritten bzw. unterschritten werden, das bedeutet, es wird überprüft, ob die Summe der Sollströme der Elektromaschinen innerhalb des durch den maximalen und den minimalen Grenzstrom aufgespannten Intervalls liegen. Bei einer Überschreitung des maximalen Grenzstroms oder einer Unterschreitung des minimalen Grenzstroms werden die Sollströme - wiederum also bereits vor einer Ansteuerung der Elektromaschinen - anhand wenigstens einer Änderungsregel so abgeändert, dass die Summe der Sollströme in dem durch die Grenzströme aufgespannten Intervall liegt. Hierbei sind die Änderungsregeln so zu wählen, dass ein möglichst komfortables, gleichzeitig aber den Bedienvorgaben eines Fahrers entsprechendes Verhalten des Kraftfahrzeugs erhalten wird, worauf im Folgenden noch näher eingegangen werden wird. Aus den geänderten Sollströmen können nun geänderte Sollmomente bestimmt werden, die zur eigentlichen Ansteuerung der Elektromaschinen verwendet werden.

Auf diese Weise ermöglicht es das erfindungsgemäße Verfahren, durch die Veränderung der Sollmomente im Hinblick auf die Batteriestromgrenzen bereits von vorneherein eine die Grenzströme der Batterie berücksichtigende Ansteuerung der Elektromaschinen zu bewirken, so dass insgesamt eine dynamischere Umsetzung der Ansteuerung, insbesondere bei der fahrdynamischen Querverteilung, möglich wird, denn es tritt kein Zeitverzug durch eine Buskommunikation auf. Das erfindungsgemäße Verfahren ist leicht zu realisieren, da es letztlich lediglich einen weiteren Verarbeitungsschritt, insbesondere zum Abschluss der Verarbeitungskette, bildet. Insbesondere werden die aktuellen Grenzströme der Batterie üblicherweise ohnehin über einen in dem Kraftfahrzeug vorhandenen Bus, insbesondere einen CAN-Bus oder einen FlexRay-Bus, geliefert.

In zweckmäßiger Ausgestaltung der vorliegenden Erfindung kann vorgesehen sein, dass zur Umrechnung von Sollströmen in Sollmomente und umgekehrt wenigstens ein Kennfeld verwendet wird. Insbesondere im Antriebssteuergerät können also Kennfelder vorgesehen sein, die eine Umrechnung des Sollmoments in einen zu dessen Erzeugung notwendigen Strom ermöglichen. Solche Kennfelder, die auch als Wirkungsgradkennfelder bezeichnet werden können, können unter Kenntnis der Eigenschaften der Elektromaschinen leicht ermittelt werden und sind meist ohnehin, insbesondere in der der Elektromaschine zugeordneten Leistungselektronik, bereits bekannt und vorhanden. Dabei ist es besonders vorteilhaft, wenn das Kennfeld eine Abhängigkeit von wenigstens einem weiteren Betriebsparameter der Elektromaschinen aufweist, insbesondere von einer Spannungslage und/oder einer Drehzahl. Meist ist die zusätzliche Berücksichtigung der aktuellen Spannungslage und der Drehzahl ausreichend, um eine hinreichend genaue Umrechnung von Sollmomenten in Sollströme zu erhalten. Je genauer die Umrechnung von Sollmomenten in Sollströme realisiert wird, desto genauer können die Grenzströme der Batterie eingehalten werden.

In weiterer Ausgestaltung der vorliegenden Erfindung kann vorgesehen sein, dass für jede Elektromaschine, insbesondere jeweils in einer einer Elektromaschine zugeordneten Recheneinheit, ein unter Berücksichtigung von Betriebsparametern der Elektromaschine, insbesondere der der Temperatur der Elektromaschine und/oder einer Leistungselektronik der Elektromaschine und/oder von die Leistungsfähigkeit der Elektromaschine betreffenden Parametern, ein maximal und ein minimal mögliches Grenzdrehmoment der Elektromaschine ermittelt wird, wobei bei einem nicht innerhalb der Grenzmomente liegenden, von der Steuerlogik gelieferten Sollmoment das Sollmoment auf das überschrittene Grenzdrehmoment gesetzt wird. In diesem Fall wird also zusätzlich eine weitere Information von den Elektromaschinen geliefert, die das maximal und minimal mögliche Drehmoment, unabhängig von den aktuellen Batteriegrenzen und lediglich abhängig von den aktuellen physikalischen Grenzen der Elektromaschinen, insbesondere von den Temperaturen, liefert. Derartige Grenzdrehmomente können beispielsweise von der Leistungselektronik, welche insbesondere einen Umrichter umfasst, wenn es sich um asynchrone Elektromaschinen handelt, selbst ermittelt werden und als Momentenvorhersage dem Antriebssteuergerät zur Verfügung gestellt werden. Mit besonderem Vorteil kann dabei vorgesehen sein, dass bei der Ermittlung der Grenzmomente auch der theoretisch mögliche Maximalstrom und der theoretisch mögliche Minimalstrom (Ladestrom) der Batterie berücksichtigt werden. Diese theoretischen maximalen und minimalen Ströme der Hochvoltbatterie, die auch als "Katalogwert" bezeichnet werden können, werden dabei auch über den Bus gesendet, so dass sie insbesondere innerhalb einer Steuereinheit der Elektromaschine selbst verwendet werden können, um im Rahmen der Momentenvorhersage immer das maximal bzw. minimal mögliche Grenzdrehmoment zu nennen, welches mithin unabhängig von den aktuellen Batteriegrenzen ist und lediglich abhängig vom aktuellen Zustand der Elektromaschine. Diese Grenzdrehmomente können dann genutzt werden, um hier bereits eine Vorabbeschränkung zu realisieren, die auf die Leistungsmöglichkeiten und den aktuellen Zustand der Elektromaschinen Rücksicht nimmt. Dies ist jedoch nicht zwangsläufig notwendig, da der "Katalogwert" ggf. überschritten werden kann, wenn beispielsweise der Batterie der theoretisch mögliche Maximalstrom entzogen wird und zusätzlich von der anderen Elektromaschine noch weiterer Strom geliefert wird, so dass in der Summe der theoretisch mögliche Maximalstrom überschritten ist.

Ferner kann vorgesehen sein, dass, insbesondere im Rahmen einer durch die Ansteuerung der Elektromaschinen zu erzeugenden Lenkwirkung, als Änderungsregel das Aufrechterhalten einer durch die Ansteuerung der Elektromaschinen erzeugten Lenkwirkung und/oder das Aufrechterhalten eines Gesamtmoments und/oder eine Optimierung im Hinblick auf die insbesondere gewichtet betrachteten Kriterien Aufrechterhalten einer durch die Ansteuerung der Elektromaschinen erzeugten Lenkwirkung und Aufrechterhalten eines Gesamtmoments erfolgt. Gerade also im Hinblick auf eine fahrdynamische Querverteilung, bei der eine Lenkwirkung erzielt werden soll, können die Änderungsregeln beispielsweise so vorgesehen sein, dass die fahrdynamische Querverteilung durch eine gegebenenfalls notwendige Stromabregelung nicht beeinflusst wird, sondern nur das Fahrzeugantriebsdrehmoment, das sich als Summe der Einzeldrehmomente der Elektromaschinen ergibt. Jedoch ist es auch denkbar, sich am Gesamtdrehmoment zu orientieren, um ein Absinken der Geschwindigkeit des Kraftfahrzeugs oder dergleichen zu vermeiden; Schließlich ist es aber auch möglich, ein Optimierungsverfahren vorzusehen, welches gewichtet bemüht ist, entsprechend gut wenigstens teilweise beide Vorgaben zu erfüllen.

Neben dem Verfahren betrifft die vorliegende Erfindung auch ein Kraftfahrzeug, umfassend eine Anordnung von wenigstens zwei Elektromaschinen, die mit unterschiedlichen Rädern des Kraftfahrzeugs bewegungsgekoppelt sind und mit einer Batterie verbunden sind, sowie ein den Betrieb der Elektromaschinen steuerndes Antriebssteuergerät, das zur Durchführung des erfindungsgemäßen Verfahrens ausgebildet ist.

Sämtliche Ausführungen bezüglich des erfindungsgemäßen Verfahrens lassen sich analog auf das erfindungsgemäße Kraftfahrzeug übertragen, so dass auch mit diesem die Vorteile der vorliegenden Erfindung erhalten werden können.

Das erfindungsgemäße Verfahren, insbesondere realisiert im erfindungsgemäßen Kraftfahrzeug, ermöglicht es also, bereits in der Theorie und vor der Ansteuerung Ströme geeignet zu verschieben, um die Grenzströme der Batterie zu erfüllen. Nachdem insgesamt die Elektromaschinen so verschaltet sind, dass sie gemeinsam an die Batterie angeschlossen sind, gleichen sich so Ströme insgesamt auch in der Praxis aus, dass der vorab bestimmte Summenstrom realisiert wird.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Kraftfahrzeugs, und
- Fig. 2: eine Skizze zum Ablauf des erfindungsgemäßen Verfahrens.

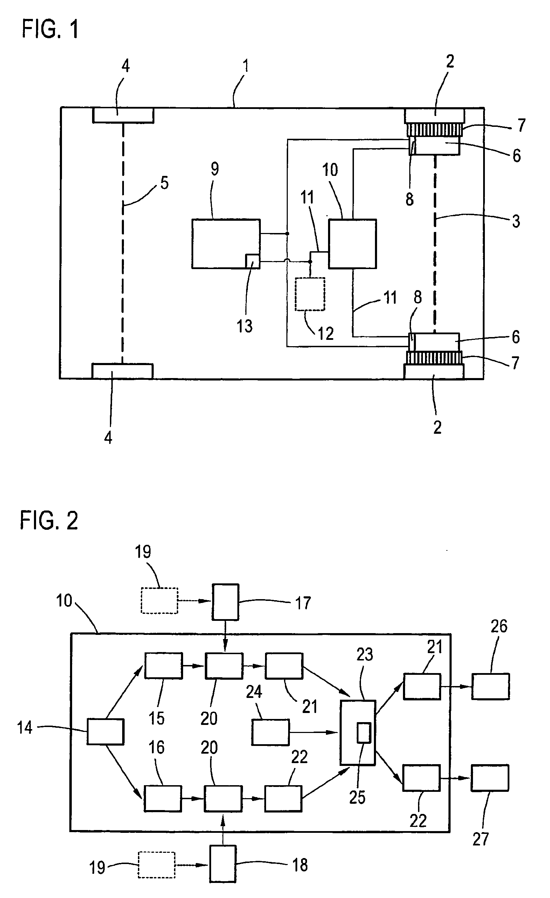

Fig. 1 zeigt eine Prinzipskizze eines Ausführungsbeispiels des erfindungsgemäßen Kraftfahrzeugs 1. Dabei handelt es sich vorliegend um ein reines Elektrokraftfahrzeug, wobei die vorliegende Erfindung auch im Rahmen von Hybridkraftfahrzeugen einsetzbar ist.

Das Kraftfahrzeug weist zwei Räder 2 einer Vorderachse 3 und zwei Räder 4 einer Hinterachse 5 auf. Jedem Rad der Vorderachse 3 ist eine Elektromaschine 6 zugeordnet, die über eine Bewegungskopplungseinrichtung 7, insbesondere ein Getriebe, mit den Rädern 2 bewegungsgekoppelt ist und diese somit antreiben kann bzw. im generatorischen Betrieb anhand einer Bewegung der Räder 2 Strom erzeugen kann. Die Elektromaschinen 6 sind über eine Leistungselektronik 8, die auch eine Steuereinheit für die Elektromaschinen 6 umfasst, mit der Batterie 9, hier einer Hochvoltbatterie, verbunden. Im vorliegenden Beispiel handelt es sich bei den Elektromaschinen 6 um asynchrone Maschinen, so dass die Leistungselektronik 8 entsprechend einen Umrichter enthält.

Der Betrieb der dargestellten Antriebsanordnung wird über ein Antriebssteuergerät 10 gesteuert, welches über einen hier nur angeordneten Fahrzeugbus 11 mit den Elektromaschinen 6 und weiteren, bei 12 angedeuteten Fahrzeugsystemen Daten austauschen kann.

Auch die Batterie 9 weist ein Batteriesteuergerät 13 auf, welches über den Fahrzeugbus 11 mit dem Antriebssteuergerät 10, den Elektromaschinen 6 und den weiteren Fahrzeugsystemen 12 kommunizieren kann. Die Batterie 9 stellt über den Fahrzeugbus 11 sowohl ihren theoretischen Maximalstrom und ihren theoretischen Minimalstrom (Katalogwerte) als auch aktuelle maximale und minimale Grenzströme zur Verfügung, die insbesondere vom Ladezustand der Batterie 9 abhängig sind.

Das Antriebssteuergerät 10 ist nun zur Durchführung des erfindungsgemäßen Verfahrens ausgebildet, welches im Hinblick auf Fig. 2 näher erläutert werden soll.

In dem Antriebssteuergerät 10 ist zunächst wie grundsätzlich bekannt eine durch Algorithmen und/oder Hardware realisierbare Steuerlogik 14 vorgesehen, deren Ausgabe Sollmomente 15, 16 jeweils für die linke Elektromaschine 6 und die rechte Elektromaschine 6 sind. Gleichzeitig werden vom Antriebssteuergerät 10 selbst oder direkt in den Steuereinheiten der Elektromaschinen 6 maximal und minimal mögliche Grenzdrehmomente 17, 18 für die linke und die rechte Elektromaschine 6 ermittelt. Dabei wird nicht nur der aktuelle Zustand, insbesondere die Thermik, der Elektromaschine 6, insbesondere auch der Leistungselektronik 8, sowie deren Leistungsfähigkeiten berücksichtigt, sondern auch der bereits erwähnte Maximalstrom und Minimalstrom der Batterie 9, symbolisiert durch die Kästen 19.

In einem für beide Seiten gleichen Schritt 20 wird dann überprüft, ob sich das jeweilige Solldrehmoment 15, 16 innerhalb der durch die Grenzdrehmomente 17, 18 definierten Intervalle bewegen, wobei bei Überschreitung der Intervallgrenzen das Sollmoment auf die Intervallgrenze rückgesetzt wird, um auf diese Weise die (aktuelle) tatsächliche Leistungsfähigkeit der Elektromaschinen 6 zu berücksichtigen.

Die gegebenenfalls so bereits angepassten Sollmomente 15, 16 werden sodann mittels Kennfeldern 21, 22 in Sollströme umgerechnet, die zur Erzeugung der Sollmomente notwendig sind. In den Kennfeldern sind auch die Spannungslage und die Drehzahl der Elektromaschinen berücksichtigt.

In einem Schritt 23 werden die ermittelten Sollströme nun addiert, wonach überprüft wird, ob der Summenstrom innerhalb des durch die von der Batterie 9 gelieferten Grenzströme 24, also die aktuellen Grenzströme, insbesondere abhängig vom Ladezustand, beschriebenen Intervalls liegen. Ist dies der Fall, so bleiben die Sollmomente 15, 16 unverändert. Wird jedoch einer der Grenzströme 24 überschritten bzw. unterschritten, liegt der Summenstrom also außerhalb des Intervalls, das durch die Grenzströme 24 aufgespannt wird, so werden die Sollströme angepasst, wobei Änderungsregeln 25 berücksichtigt werden.

Im vorliegenden Ausführungsbeispiel sind die Änderungsregeln so ausgelegt, dass eine durch die Ansteuerung der Elektromaschinen 6 erzeugte Lenkwirkung aufrechterhalten wird, so dass sich letztlich eine Änderung im Gesamtantriebsmoment der Elektromaschinen 6 ergibt.

Jedoch ist es auch möglich, die Änderungsregeln anders auszugestalten, insbesondere im Hinblick auf eine Optimierung, wobei beispielsweise die Kriterien "Aufrechterhalten einer durch die Ansteuerung der Elektromaschinen erzeugten Lenkwirkung" und "Aufrechterhalten eines Gesamtmoments" gewichtet betrachtet werden können. Auch bei Ansteuerungsvorgängen, die nicht auf eine Lenkwirkung abzielen, also keine fahrdynamische Querverteilung enthalten, sind entsprechende Änderungsregeln denkbar.

Über die nun erneut genutzten Kennfelder 21, 22 kann aus den gegebenenfalls geänderten Sollströmen ein geändertes Sollmoment 26, 27 ermittelt werden, welches dann zur konkreten Ansteuerung der Elektromaschinen 6 genutzt wird, so dass resultierend die Grenzströme 24 der Batterie 9 nicht überschritten bzw. unterschritten werden.

Es sei an dieser Stelle noch angemerkt, dass auch Ausgestaltungen denkbar sind, bei denen auch den Rädern 4 der Hinterachse 5 Elektromaschinen 6 zugeordnet sind.

## Patentansprüche

1. Verfahren zur Steuerung des Betriebs einer Anordnung von wenigstens zwei Elektromaschinen (6), die mit unterschiedlichen Rädern (2) eines Kraftfahrzeugs (1) bewegungsgekoppelt sind und mit einer Batterie (9) verbunden sind, welche Batterie (9) einen aktuellen minimalen und einen aktuellen maximalen Grenzstrom (24) für die Elektromaschinen (6) zur Verfügung stellt, wobei von einer Antriebssteuerlogik (14) Sollmomente (15, 16) für die Elektromaschinen (6) zur Verfügung gestellt werden,
**dadurch gekennzeichnet,**
**dass** für jede Elektromaschine (6) ein aus dem Sollmoment (15, 16) resultierender Sollstrom ermittelt wird und die Summe der Sollströme der Elektromaschinen (6) mit dem maximalen und dem minimalen Grenzstrom (24) verglichen werden, wobei bei einer außerhalb des durch die Grenzströme (24) definierten Intervalls liegenden Summe die Sollströme anhand wenigstens einer Änderungsregel (25) so abgeändert werden, dass die Summe der Sollströme innerhalb der Grenzströme (24) liegt, und aus den geänderten Sollströmen geänderte Sollmomente (26, 27) bestimmt werden, die zur Ansteuerung der Elektromaschinen (6) verwendet werden.

2. Verfahren nach Anspruch 1,
**dadurch gekennzeichnet,**
**dass** zur Umrechnung von Sollströmen in Sollmomente (15, 16, 26, 27) und umgekehrt wenigstens ein Kennfeld (20, 21) verwendet wird.

3. Verfahren nach Anspruch 2,
**dadurch gekennzeichnet,**
**dass** das Kennfeld (20, 21) eine Abhängigkeit von wenigstens einem weiteren Betriebsparameter der Elektromaschinen (6) aufweist, insbesondere von einer Spannungslage und/oder einer Drehzahl.

4. Verfahren nach einem der vorangehenden Ansprüche,
**dadurch gekennzeichnet,**
**dass** für jede Elektromaschine (6), insbesondere jeweils in einer einer Elektromaschine (6) zugeordneten Recheneinheit, ein unter Berücksichtigung von Betriebsparametern der Elektromaschine (6), insbesondere der Temperatur der Elektromaschine (6) und/oder einer Leistungselektronik (8) der Elektromaschine (6) und/oder von die Leistungsfähigkeit der Elektromaschine (6) betreffenden Parametern, ein maximal und ein minimal mögliches Grenzdrehmoment (17, 18) der Elektromaschine (6) ermittelt wird, wobei bei einem nicht innerhalb der Grenzmomente (17, 18) liegenden, von der Steuerlogik (14) gelieferten Sollmoment (15, 16) das Sollmoment (15, 16) auf das überschrittene Grenzdrehmoment (17, 18) gesetzt wird.

5. Verfahren nach Anspruch 4,
**dadurch gekennzeichnet,**
**dass** bei der Ermittlung der Grenzmomente (17, 18) auch der theoretisch mögliche Maximalstrom und der theoretisch mögliche Minimalstrom der Batterie (9) berücksichtigt werden.

6. Verfahren nach einem der vorangehenden Ansprüche,
**dadurch gekennzeichnet,**
**dass**, insbesondere im Rahmen einer durch die Ansteuerung der Elektromaschinen (6) zu erzeugenden Lenkwirkung, als Änderungsregel (24) das Aufrechterhalten einer durch die Ansteuerung der Elektromaschinen (6) erzeugten Lenkwirkung und/oder das Aufrechterhalten eines Gesamtmoments und/oder eine Optimierung im Hinblick auf die insbesondere gewichtet betrachteten Kriterien Aufrechterhalten einer durch die Ansteuerung der Elektromaschinen (6) erzeugten Lenkwirkung und Aufrechterhalten eines Gesamtmoments verwendet wird.

7. Kraftfahrzeug (1), umfassend eine Anordnung von wenigstens zwei Elektromaschinen (6), die mit unterschiedlichen Rädern (2) des Kraftfahrzeugs (1) bewegungsgekoppelt sind und mit einer Batterie (9) verbunden sind, sowie ein den Betrieb der Elektromaschinen (6) steuerndes Antriebsteuergerät (10), das zur Durchführung eines Verfahrens nach einem der vorangehenden Ansprüche ausgebildet ist.

## Claims

1. Method of controlling the operation of an arrangement of at least two electrical machines (6) movably coupled with different wheels (2) of a motor vehicle (1) and connected to a battery (9), said battery (9) providing an actual minimum and actual maximum limit current (24) for the electrical machines (6), with set torques (15,16) being provided for the electrical machines (6) by a drive control logic controller (14), **characterised in that** for each electrical machine (6) a set current is calculated resulting from the set torque (15, 16) and the sum of the set torques of the electrical machines (6) are compared with the maximum and minimum limit current (24), such that in the event of a sum lying outside the intervals defined by the limit currents (24), the set currents are modified on the basis of at least one modification rule (25) such that the sum of the set currents lies within the limit currents (24), and modified set torques (26, 27) are determined from the modified set currents used to control the electrical machines (6).

2. Method according to Claim 1, **characterised in that** a characteristics map (20, 21) is used to convert the set currents into set torques (15, 16, 26, 27) and vice-versa.

3. Method according to Claim 2, **characterised in that** the characteristics map (20, 21) incorporates a function of at least one of the further operating parameters of the electrical machines (6), in particular a voltage situation and/or a speed.

4. Method according to any of the above claims, **characterised in that** a maximum and minimum possible limit torque (17, 18) of the electrical machine (6) are calculated for each electrical machine (6), in particular in a separate computing unit allocated to each individual electrical machine (6), taking into account the operating parameters of the electrical machine (6), in particular the temperature of the electrical machine (6) and/or the power electronics (8) of the electrical machine (6) and/or the parameters affecting the performance of the electrical machine (6), whereby in the event of a set torque (15, 16) supplied by the control logic (14) not lying with the limit torques (17, 18), the set torque (15, 16) is set at the exceeded limit torque (17, 18).

5. Method according to Claim 4, **characterised in that** the theoretically-possible maximum current and the theoretically-possible minimum current of the battery (9) are also taken into account in calculating the limit torques (17, 18).

6. Method as in any of the above claims, **characterised in that** maintenance of a steering effect generated by controlling the electrical machines (6), and/or maintenance of a total torque, and/or optimisation of the criteria, regarded as having particular weight, relating to maintaining a steering effect generated by controlling the electrical machines (6) and maintenance of a total torque, is used as a modification rule (24), particularly in relation to the steering effect to be generated by the control of the electrical machines (6) .

7. Motor vehicle (1), including an arrangement of at least two electrical machines (6) movably coupled with different wheels (2) of the motor vehicle (1) and connected to a battery (9), and operation of a drive control logic unit (10) controlling the electrical machines (6), used for implementation of a method according to any of the above claims.

## Revendications

1. Procédé de commande du fonctionnement d'un ensemble d'au moins deux machines électriques (6), qui sont couplées quant au mouvement avec différentes roues (2) d'un véhicule automobile (1) et qui sont reliées à une batterie (9), laquelle batterie (9) met à disposition des courants limites (24) minimal actuel et maximal actuel pour les machines électriques (6), des couples de consigne (15, 16) pour les machines électriques (6) étant mis à disposition par une unité logique de commande d'entraînement (14),
**caractérisé en ce que**, pour chaque machine électrique (6), on détermine un courant de consigne résultant du couple de consigne (15, 16) et on compare la somme des courants de consigne des machines électriques (6) aux courants limites (24) maximal et minimal, les courants de consigne étant modifiés à l'aide d'au moins une règle de modification (25) lorsque la somme se situe en dehors de l'intervalle défini par les courants limites (24) de telle sorte que la somme des courants de consigne se retrouve à l'intérieur des courants limites (24), et on détermine à partir des courants de consigne modifiés des couples de consigne modifiés (26, 27) qui sont utilisés pour la commande des machines électriques (6).

2. Procédé selon la revendication 1, **caractérisé en ce que**, pour convertir des courants de consigne en couples de consigne (15, 16, 26, 27) et inversement, on utilise au moins une courbe de caractéristiques (20, 21).

3. Procédé selon la revendication 2, **caractérisé en ce que** la courbe de caractéristiques (20, 21) dépend d'au moins un autre paramètre dé fonctionnement des machines électriques (6), notamment d'une condition de tension et/ou d'une vitesse de rotation.

4. Procédé selon l'une des revendications précédentes, **caractérisé en ce que**, pour chaque machine électrique (6), on détermine, notamment à chaque fois dans une unité de calcul associée à une machine électrique (6), des couples limites (17, 18) maximal et minimal de la machine électrique (6) en tenant compte de paramètres de fonctionnement de la machine électrique (6), notamment des paramètres concernant la température de la machine électrique (6) et/ou une électronique de puissance (8) de la machine électrique (6) et/ou la capacité de puissance de la machine électrique (6), le couple de consigne (15, 16) étant réglé sur le couple limite dépassé (17, 18) lorsque le couple de consigne (15, 16) fourni par l'unité logique de commande (14) ne se trouve pas à l'intérieur des couples limites (17, 18).

5. Procédé selon la revendication 4, **caractérisé en ce que**, lors de la détermination des couples limites (17, 18), on prend aussi en compte le courant maximal théoriquement possible et le courant minimal théoriquement possible de la batterie (9).

6. Procédé selon l'une des revendications précédentes, **caractérisé en ce que**, notamment dans le cadre d'une action de commande de direction à produire par la commande des machines électriques (6), on utilise comme règle de modification (24) le maintien d'une action de commande de direction produite par la commande des machines électriques (6) et/ou le maintien d'un couple total et/ou une optimisation, portant sur les critères considérés notamment de manière pondérée, maintien d'une action de commande de direction produite par la commande des machines électriques (6) et maintien d'un couple total.

7. Véhicule automobile (1), comprenant un ensemble d'au moins deux machines électriques (6), qui sont couplées quant au mouvement avec différentes roues (2) du véhicule automobile (1) et qui sont reliées à une batterie (9), ainsi qu'un appareil de commande d'entraînement (10) qui commande le fonctionnement des machines électriques (6) et qui est conçu pour la mise en oeuvre d'un procédé selon l'une des revendications précédentes.
